# FASCICULE DE BREVET EUROPEEN

(11) **EP 0 307 313 B1**
(45) Date de publication et mention de la délivrance du brevet: **17.03.1993**
(21) Numéro de dépôt: 88402261.7
(22) Date de dépôt: 08.09.1988
(51) Int. Cl.: B23P 19/02

(54) **Procédé de détubage de condenseurs**
Verfahren zum Entfernen der Rohre von Kondensatoren
Method of removing tubes from condensers

(30) Priorité: 09.09.1987 FR 8712493
(43) Date de publication de la demande: 15.03.1989
(73) Titulaire: Société Industrielle PECQUET, TESSON, 78220 Viroflay (Yvelines) (FR)
(72) Inventeur: Bonenfant, Luc, F-78000 Versailles (FR); Chabannes, Bernard, F-30200 Chusclan (FR)
(74) Mandataire: Bloch, Gérard

(56) Documents cités:
- FR-A- 2 529 109
- GB-A- 2 084 542
- US-A- 3 857 158
- US-A- 4 044 444

## Description

La présente invention a pour objet un procédé de détubage des condenseurs ou échangeurs, c'est-à-dire des appareils qui comportent un grand nombre de tubes parallèles débouchant par chacune de leurs extrémités dans des boîtes à fluide respectives.

Le détubage, c'est-à-dire l'extraction des tubes de leurs faisceaux tubulaires, est rendu nécessaire périodiquement, pour remplacer les tubes usés ou percés. Ce détubage est un travail très pénible et très long du fait qu'il s'agit de tubes de grande longueur, pouvant atteindre une quinzaine de mètres et qui sortent des faisceaux tubulaires souvent tout tordus.

Leur extraction et leur évacuation posent donc des problèmes et nécessitent de grandes surfaces de manoeuvre.

Ce sont ces problèmes que l'invention a cherché à résoudre
On a déjà prévu, à cet effet, non plus de tirer les tubes par une de leurs extrémités dans la direction qu'ils occupent dans leur faisceau tubulaire jusqu'à ce qu'ils soient sortis entièrement de ce faisceau, mais de limiter leur extraction de manière que, pendant toute l'extraction, chaque point du tube extrait ne s'écarte pas de la plaque tubulaire par laquelle il est extrait, de plus d'une distance prédéterminée, les portions de tube ainsi extraites étant chaque fois coupées.

Ces procédés décrits notamment dans les brevets US-A-3 857 158 et GB-A-2 084 542 permettent, on le voit, aux ouvriers de n'avoir à manipuler que des portions de tube s'écartant aussi peu que l'on veut de la plaque tubulaire d'extraction ; donc de n'avoir besoin de disposer à l'arrière de cette plaque que d'un espace limité à volonté.

Mais ces procédés exigent des moyens de traction compliqués qui, eux, exigent des espaces disponibles importants et sont coûteux.

L'invention vise à simplifier et à réduire l'encombrement de ces moyens et elle prévoit, à cet effet, d'aplatir le tube dès qu'une petite longueur de celui-ci a été extraite.

Dans une forme de réalisation préférée, après aplatissement du tube extrait, on le cintre, puis on l'enroule sur lui-même pour en faire un rouleau ou une galette.

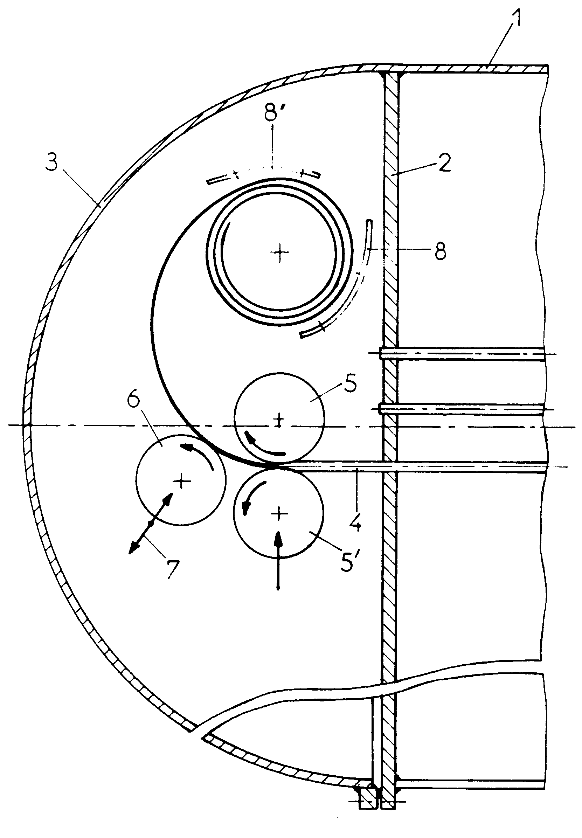

A titre nullement limitatif, on a représenté à la figure unique du dessin annexé, un schéma de principe d'un moyen de mise en oeuvre du procédé de l'invention.

Sur cette figure, est représenté schématiquement, avec arrachement, le corps d'un échangeur 1, avec la plaque tubulaire 2 et la boîte à fluide 3 de sortie.

Un tube 4 est en cours d'extraction et passe entre deux rouleaux 5, 5' entre lesquels il est écrasé. Un rouleau 6 monté sur glissière 7 provoque le cintrage du tube 4 provoquant son amenée en contact avec une forme 8 et son enroulement sur lui-même.

Chaque tube se transforme ainsi en galette peu encombrante et facile à évacuer et éliminer.

Les moyens nécessaires pour la mise en oeuvre de ce procédé peuvent être groupés sous forme d'une machine de faible encombrement, susceptible de tirer et traiter simultanément plusieurs tubes. Elle peut, ainsi que l'ouvrier, être même à l'intérieur de la boîte à fluide 3, sans avoir à démonter celle-ci.

Le procédé permet donc de procéder d'un côté au détubage dans un espace restreint pendant qu'on retube de l'autre dans le grand espace prévu à cet effet.

## Revendications

1. Procédé de détubage des condenseurs ou échangeurs, selon lequel on tire chaque tube par une de ses extrémités de manière que, pendant toute l'extraction, chaque point du tube extrait ne s'écarte pas de la plaque tubulaire par laquelle il est extrait, de plus d'une distance prédéterminée, on aplatit le tube dès qu'une petite longueur de tube a été extraite et, après aplatissement on commence par cintrer le tube, caractérisé par le fait qu'ensuite on enroule le tube sur lui-même pour en faire un rouleau ou une galette.

## Claims

1. De-tubing procedure for condensers or exchangers according to which each tube is pulled by one of its extremities such that, during all the extraction, each point of the extracted tube does not move away from the tubular plate through which it is extracted by more than a predetermined distance, the tube is clenched when a short length of tube has been extracted and, after the clenching, starts the bending of the tube characterised in the fact that the tube is then rolled on itself to make a roller or a blank.

## Patentansprüche

1. Verfahren zum Entfernen der Rohre von Kondensatoren oder Austauschern, gemäß dem man jedes Rohr an einem seiner Enden derart zieht, daß sich während des gesamten Vorgangs des Herausziehens jeder Punkt des herausgezogenen Rohres nicht weiter von dem Rohrboden, durch den es herausgezogen wird, entfernt als um einen vorbestimmten Abstand, man das Rohr flachdrückt, sobald eine geringe Länge des Rohres herausgezogen worden ist, und man nach dem Flachdrücken beginnt, das Rohr rundzubiegen, dadurch gekennzeichnet, daß man anschließend das Rohr um sich selbst aufrollt, um daraus eine Rolle oder Scheibe zu bilden.
